# EUROPÄISCHE PATENTSCHRIFT

(11) **EP 1 100 696 B1**
(45) Veröffentlichungstag und Bekanntmachung des Hinweises auf die Patenterteilung: **18.12.2002**
(21) Anmeldenummer: 99940147.4
(22) Anmeldetag: 04.08.1999
(51) Int. Cl.: B60P 1/02, B60P 3/055

(54) **FAHRZEUG MIT LADEBOXEN ZUR AUFNAHME VON LADEGUT**
VEHICLE WITH LOADING BOXES FOR RECEIVING LOADS
VEHICULE COMPORTANT DES CONTENEURS DE CHARGEMENT DESTINES A RECEVOIR DES MARCHANDISES

(30) Priorität: 05.08.1998 DE 29813993 U
(43) Veröffentlichungstag der Anmeldung: 23.05.2001
(73) Patentinhaber: Hurler, Walter, 86647 Buttenwiesen (DE)
(72) Erfinder: Hurler, Walter, 86647 Buttenwiesen (DE)
(74) Vertreter: Lorenz, Werner, Dr.-Ing.
(86) Internationale Anmeldenummer: EP9905653
(87) Internationale Veröffentlichungsnummer: WO00007843

(56) Entgegenhaltungen:
- EP-A- 0 818 351
- DE-U- 9 408 263
- DE-U- 9 420 587
- DE-U- 29 807 108
- FR-A- 2 504 465
- US-A- 4 708 572
- PATENT ABSTRACTS OF JAPAN vol. 008, no. 020 (M-271), 27. Januar 1984 (1984-01-27) & JP 58 180328 A (KUBOTA TEKKO KK), 21. Oktober 1983 (1983-10-21)

## Beschreibung

Die Erfindung betrifft ein Fahrzeug mit Ladeboxen zur Aufnahme von Ladegut, wobei wenigstens eine der Ladeboxen durch Hubeinrichtungen in vertikaler Richtung heb- und senkbar ist, wobei die Hubeinrichtungen auf einem in Fahrzeuglängsrichtung verlaufenden Mittelrahmen angeordnet sind, und wobei die Ladeboxen in einer unteren Position ebenerdig entladbar sind.

Ein gattungsgemäßes Fahrzeug mit einem Aufbau ist in der EP 07 33 003 B1 beschrieben. Hierbei ist es jedoch nicht möglich, beide Ladeboxen zu beladen, ohne das Fahrzeug an der Laderampe umsetzen zu müssen.

In der US 3,666,130 ist ein ähnliches Fahrzeug beschrieben. Hier ist es ebenfalls nicht möglich, Ladegut von einer Seite des Fahrzeuges zur anderen Seite durchzuladen.

Ein Fahrzeug, bei welchem zwei Ladeboxen über hydraulische/pneumatische Zylinder aus einer Fahrposition zum Entladen bis in eine Ebenerdige Position abgesenkt werden können beschreibt auch die FR 2 504 465. Die Mechanik ist dabei vergleichbar zu den beiden oben genannten Schriften im Bereich oberhalb des Mittelrahmens in der Art angeordnet, daß ein Durchladen von Ladegut auch hier nicht möglich ist, da der Raum oberhalb des Mittelrahmens von der Mechanik sowie von Verstärkungselementen eingenommen wird.

Durch die DE 94 08 263 U1 wird eine Fahrzeug beschrieben, bei welchem Ladeboxen durch auf dem Mittelrahmen angeordnete Hubeinrichtungen zum Entladen in eine ebenerdige Position absenkbar sind. Dabei ist der Komplette Aufbau mit den Ladeboxen verbunden und wird mir diesen mitbewegt. Ein Durchladen von Ladegut ist auch hier in nachteiliger Weise nicht möglich, da die Ladeboxen über Verspannkegel in der Fahrposition fixiert werden und eine Anheben der Ladeboxen über dies Fahrposition hinaus nicht möglich ist. Ein weiterer Nachteil liegt darin, daß im Bereich der Hinterachse eine Teil der Ladefläche über dem Mittelrahmen starr ausgebildet ist. Durch den mit den Ladeboxen bewegten Dachaufbau kann diese Ladefläche nur zu einem sehr geringen Teil ihrer Höhe genutzt werden, da es ansonsten zu einer Kollision zwischen dem Dach des Fahrzeuges und dem dort gelagerten Ladegut kommt.

Die EP 0 818 351 A, die DE 298 07 108 U1 sowie die US 4,708,572 A beschreiben jeweils Aufbauten, bei welchen über Hebelmechaniken oder dergleichen Teile der Ladefläche des Fahrzeuges teilweise seitlich neben das Fahrzeug gebracht und dabei oder danach abgesenkt werden. Durch diese zusätzlich zum Absenken erfolgende seitliche Bewegung werden in nachteiliger Weise einerseits die Betätigungselemente sehr aufwendig, und damit störanfällig und schwer, andererseits wird der seitliche Platzbedarf, welcher zum Abladen der Gegenstände von dem Fahrzeug erforderlich ist, sehr groß.

Zum weiteren allgemeinem Stand der Technik sei außerdem auf die JP 58 180328 A verweisen, welche eine Ladefläche zeigt, von der ein Teil über eine Art Scherenkonstruktion absenkbar ist. Konstruktionsbedingt kann hierbei jedoch kein absenken bis auf den Boden erfolgen, so daß die Entladung des Fahrzeuges nur in geringem Umfang erleichtert wird.

Der Erfindung liegt die Aufgabe zugrunde, ein Fahrzeug zu schaffen, bei dem die Ladeboxen heb- und senkbar sind, wobei ein Durchladen des Ladeguts von der einen Fahrzeugseite zur anderen möglich sein sollte, und wobei auch Ladegut transportiert werden kann, das quer über die gesamte Breite des Fahrzeug reicht.

Diese Aufgabe wird erfindungsgemäß dadurch gelöst, daß die wenigstens eine der Ladeboxen durch die Hubeinrichtungen in wenigstens drei Positionen bringbar ist, wobei die Hubeinrichtungen in Fahrzeuglängsrichtung betrachtet derart an den Ladeboxen angeordnet sind, daß der größte Teil des Raumes oberhalb des Mittelrahmens als weitere Ladefläche zur Verfügung steht, wobei Böden der Ladeboxen in einer oberen Position auf derselben Höhe wie die weitere Ladefläche liegen, wobei eine normale Fahrposition des Fahrzeuges zwischen der oberen und der unteren Position liegt, und wobei das Fahrzeug auch in der oberen Position fahrbar ist.

Die erfindungsgemäße Anordnung der Hubeinrichtungen ermöglicht es, auf dem Mittelrahmen des Fahrzeuges eine weitere, starre Ladefläche zu installieren und so ein Durchladen von der rechten zur linken Fahrzeugseite über diese Ladefläche hinweg möglich zu machen.

Von Vorteil ist es dabei, daß die Ladeboxen durch die Hubeinrichtungen in wenigstens drei Positionen bringbar und in einer unteren Position die Ladeboxen ebenerdig entladbar sind, wobei die normale Fahrposition des Fahrzeuges zwischen der oberen und der unteren Position liegt, und wobei das Fahrzeug auch in der oberen Position fahrbar ist. Damit ergibt sich neben den schon beim gattungsgemäßen Fahrzeug bekannten Vorteilen der Vorteil, daß, da das Fahrzeug auch in der oberen Position der Ladeboxen fahrbar ist, sperriges Ladegut, welches beide Ladeboxen und die weitere über dem Mittelrahmen liegende Ladefläche überdeckt, transportiert werden kann.

Die Böden der Ladeboxen sind in der oberen Position auf derselben Höhe wie die weitere Ladefläche, was in einer besonders vorteilhaften Ausgestaltung gleichzeitig der Rampenhöhe entspricht. Unter der Rampenhöhe ist dabei diejenige Höhe zu verstehen, die bei den Beladerampen für Fahrzeuge, insbesondere Lastkraftwagen, zu deren Beladung allgemein üblich ist.

In einer vorteilhaften Ausgestaltung der Erfindung kann vorgesehen sein, daß die Hubeinrichtungen am Rand bzw. am vorderen und/oder hinteren Endbereich der Ladeboxen auf dem Mittelrahmen angeordnet sind.

Dies stellt eine noch vorteilhaftere Anordnung der Hubeinrichtungen dar, ohne daß diese beim Durchladen von Ladegut hinderlich sein können.

In einer weiteren vorteilhaften Weiterbildung kann vorgesehen sein, daß die Hubeinrichtungen jeweils wenigstens ein Querjoch aufweisen, welches quer zur Fahrzeuglängsrichtung verläuft, wobei Böden der Ladeboxen durch Zugstangen mit dem Querjoch verbunden sind.

Durch diese Aufhängung der Ladeboxen an dem Querjoch lassen sich die Ladeboxen in sehr günstiger Weise heben und senken. Die Ladefläche weist dabei außer den Zugstangen und den Hubeinrichtungen keine störenden Hindernisse auf.

In günstiger Weise kann ferner vorgesehen sein, daß die Ladeboxen seitlich und gegebenenfalls auch hinten an den Außenseiten des Fahrzeuges Bordwände aufweisen, welche in wenigstens einer annähernd senkrecht zu dem Boden der Ladebox nach oben weisenden und einer annähernd senkrecht nach unten weisenden Stellung fixierbar sind.

Dadurch wird es in vorteilhafter Weise möglich, die Bordwände nach unten zu klappen und dort zu befestigen, wenn das Fahrzeug mit durchgeladenem Ladegut in der oberen Position der Ladeboxen gefahren wird. Die nach unten geklappten Bordwände dienen dann als Unterfahrschutz, so daß ein Personenkraftwagen im Falle eines unfallbedingten Zusammenstoßes mit dem erfindungsgemäßen Fahrzeug nicht unter die Konstruktion des Fahrzeugaufbaus geraten kann.

Weitere vorteilhaften Ausgestaltungen und Weiterbildungen der Erfindung sind in den weiteren Unteransprüchen beschrieben und ergeben sich aus den nachfolgend anhand der Zeichnung beschriebenen Ausführungsbeispielen.

Es zeigt:
- Fig. 1: eine Seitenansicht eines Fahrzeuges mit Ladeboxen zur Aufnahme von Ladegut;
- Fig. 2: eine schematische Schnittdarstellung gemäß der Linie II-II in Fig. 1;
- Fig. 3: eine schematische Schnittdarstellung des Aufbaus des Fahrzeuges gemäß der Linie III-III in Fig. 1, in der oberen Position der Ladeboxen;
- Fig. 4: eine schematische Schnittdarstellung des Aufbaus des Fahrzeuges gemäß der Linie III-III in Fig. 1 in der unteren Position der Ladeboxen;
- Fig. 5: eine schematische Schnittdarstellung des Aufbaus des Fahrzeuges gemäß der Linie III-III in Fig. 1, in der mittleren Position der Ladeboxen;
- Fig. 6: eine schematische Schnittdarstellung des Aufbaus des Fahrzeuges gemäß der Linie III-III in Fig. 1 in einer alternativen Ausführung; und
- Fig. 7: ein Detail VII gemäß Fig. 6.

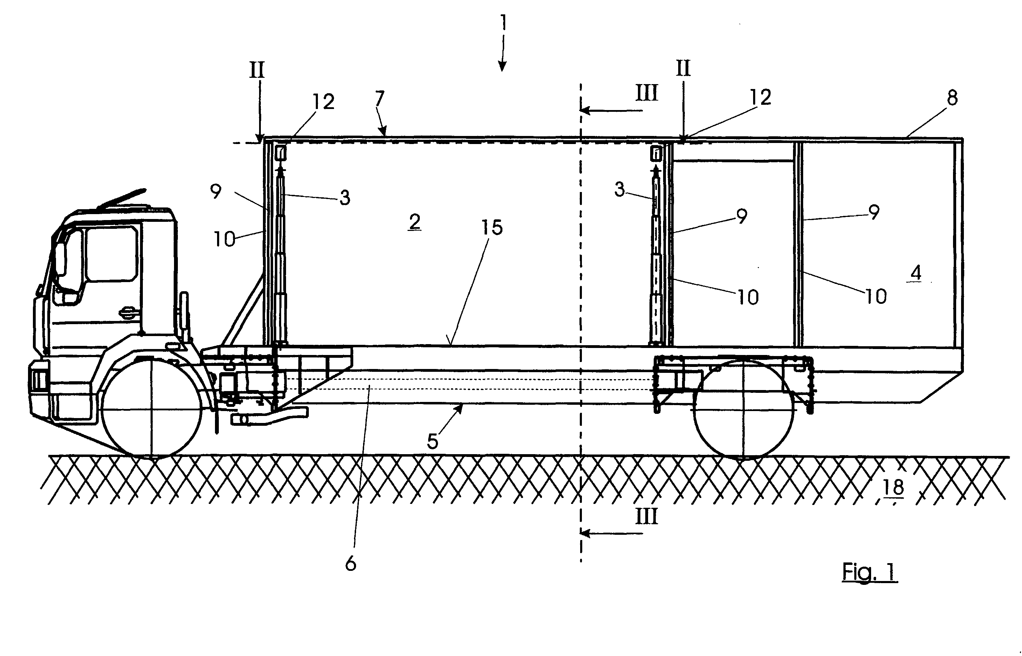

In Fig. 1 ist ein Fahrzeug 1 mit Ladeboxen 2 und Hubeinrichtungen 3, z.B. mehrstufig ausfahrbare Hydraulikund/oder Pneumatikzylinder, im mittleren Bereich des Fahrzeuges 1 erkennbar. Ein Hinterbau 4 ist dabei nicht näher dargestellt und kann beispielsweise entsprechend der EP 0 733 003 B1 ausgeführt sein.

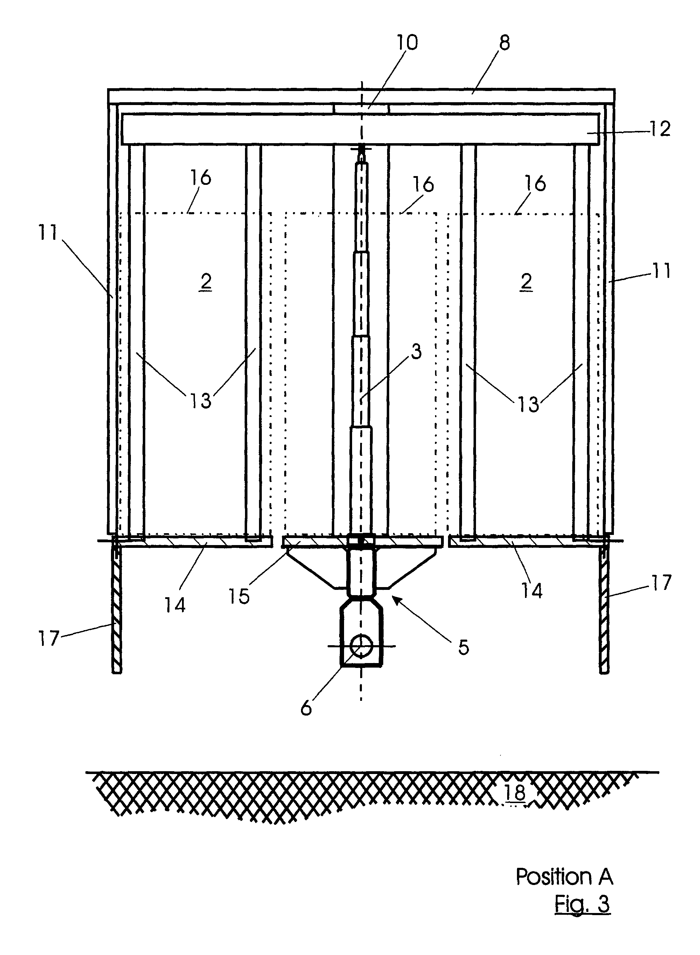

Die Hubeinrichtungen 3 sind dabei auf einem Mittelrahmen 5 des Fahrzeuges 1 befestigt und unter diesem Mittelrahmen 5 verläuft die zum Antrieb des Fahrzeuges dienende Kardanwelle 6. Über den Ladeboxen 2 befindet sich eine Dachkonstruktion 7, welche aus einem Dach 8, Trennwänden 9, Trägern 10 und Seitenwänden 11 (nur in Fig. 3 bis 6 zu erkennen) aufgebaut ist. Unterhalb dieser starren Dachkonstruktion 7 ist an dem oberen Ende der Hubeinrichtungen 3 jeweils ein Querjoch 12 erkennbar.

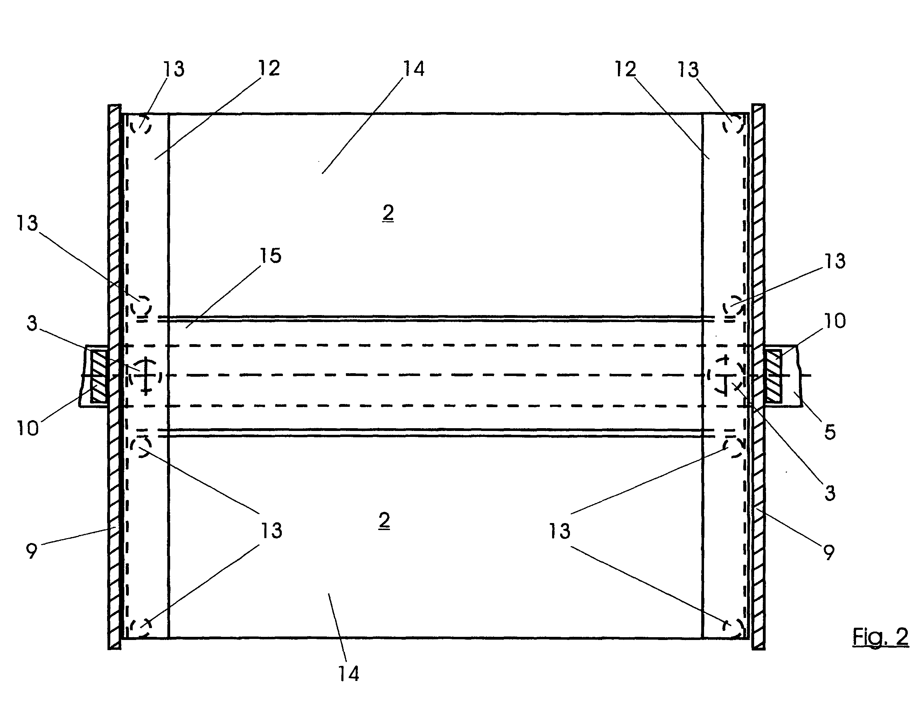

In Fig. 2, einer schematischen Schnittdarstellung, ist ein Teil des Aufbaus des Fahrzeuges 1 ohne das Dach 8 dargestellt. Auf dem Mittelrahmen 5 sind die Träger 10 für die Dachkonstruktion 7 und zwei der Trennwände 9 zu erkennen. Weiter sind die Hubeinrichtungen 3 auf dem Mittelrahmen 5 angebracht und eines der Querjoche 12 ist auf jeder der Hubeinrichtungen 3 angeordnet. Neben dem Mittelrahmen 5 befinden sich die über Zugstangen 13 mit den Querjochen 12 verbundenen Böden 14 der Ladeboxen 2. Durch die Hubeinrichtungen 3 können somit über die Querjoche 12 und die Zugstangen 13 die Böden 14 der Ladeboxen 2 in vertikaler Richtung angehoben bzw. abgesenkt werden. Außerdem ist in der Draufsicht eine direkt über dem Mittelrahmen 5 angeordnete, weitere Ladefläche 15 erkennbar.

Die Hubeinrichtungen 3 sind dabei so an den Ladeboxen 2 angeordnet, daß ein Durchladen von einer Ladebox 2 zur anderen Ladebox 2 über die weitere Ladefläche 15 möglich ist. Hierzu sind die Hubeinrichtungen 3 am Rand bzw. in Fahrzeuglängsrichtung betrachtet am vorderen und hinteren Endbereich der Ladeboxen 2 angeordnet.

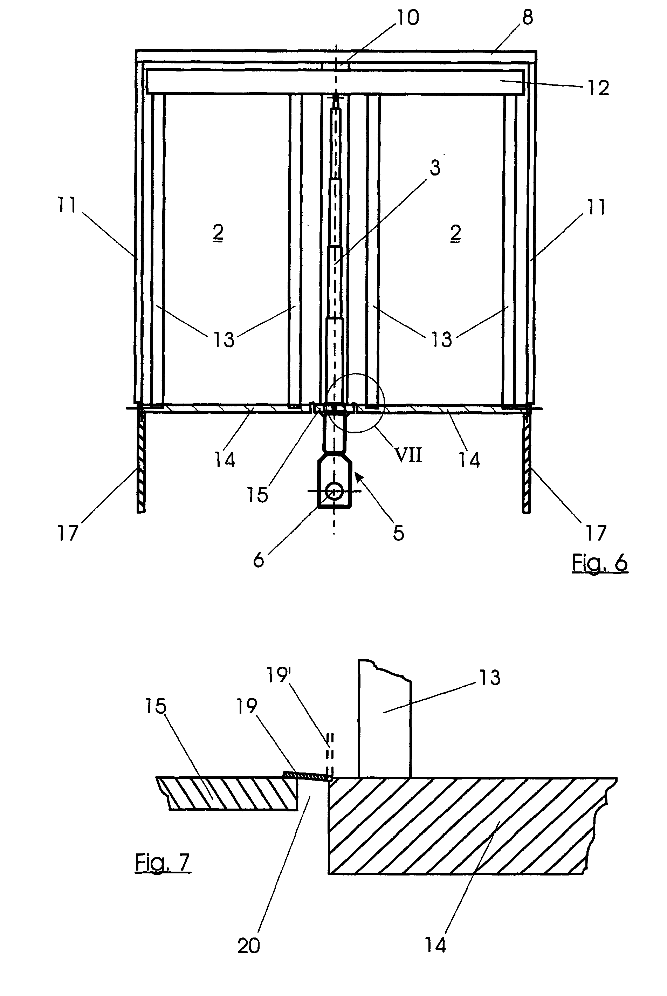

Das für die nachfolgenden Figuren 3 bis 6 gewählte Ausführungsbeispiel zeigt zwei Ladeboxen 2, welche die gleiche Breite aufweisen wie die starre Ladefläche 15, die über dem Mittelrahmen 5 des Fahrzeuges 1 angeordnet ist. Eine alternative, konstruktive Möglichkeit dazu zeigt die Fig. 6, wobei die Ladeboxen 2 die maximal mögliche Breite aufweisen und die weitere Ladefläche 15 entsprechend schmal ausgeführt ist.

In der in Fig. 3 dargestellten oberen Position A der Ladeboxen 2 liegen die Böden 14 der Ladeboxen 2 mit ihrer Oberkante auf derselben Höhe wie die starre Ladefläche 15 über dem Mittelrahmen 5. Ein Durchladen eines Ladeguts 16 von einer Seite des Fahrzeuges 1 aus ist in dieser Position A möglich, wobei das Ladegut 16 hier durch die Umrisse von drei handelsüblichen Rollcontainern 16 angedeutet wird.

Durch die Möglichkeit, das Ladegut 16 von einer Seite des Fahrzeuges 1 aus durchzuladen, muß das Fahrzeug 1 nicht rangiert werden nachdem es zur Hälfte beladen ist, um mit seiner noch nicht beladenen Seite an die Laderampe zu gelangen.

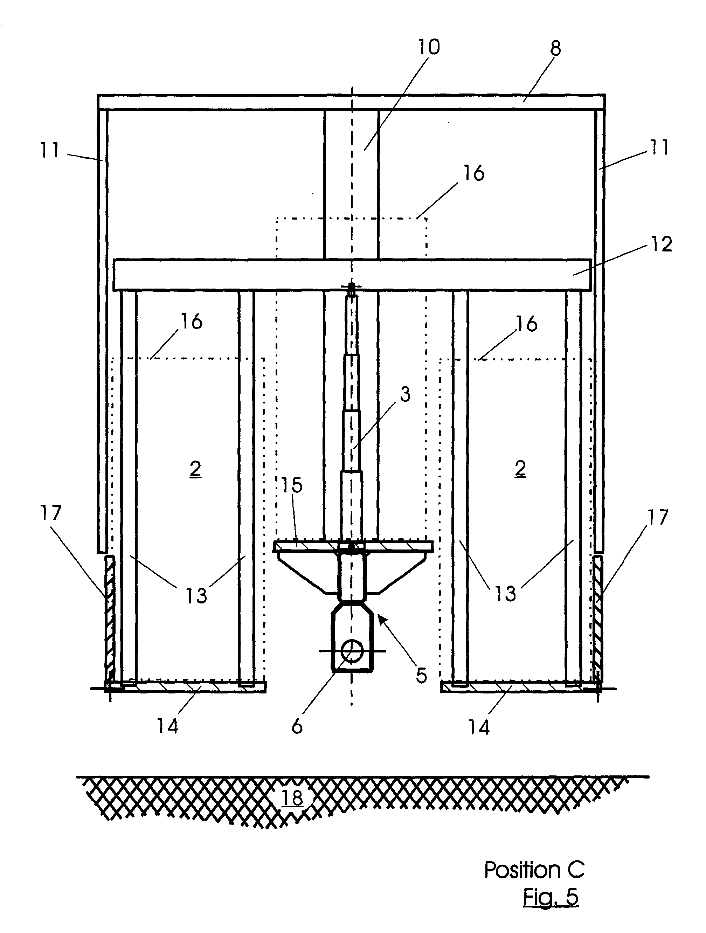

Normalerweise werden die Ladeboxen 2 beim Fahren des Fahrzeuges 1 in eine unterhalb der Position A liegende Position C (in Fig. 5 dargestellt) abgesenkt. Allerdings ist es auch möglich in der dargestellten Position A mit dem Fahrzeug 1 zu fahren. Dabei können die an den Fahrzeugaußenseiten rechts und links angebrachten Bordwände 17 als Unterfahrschutz des Aufbaus des Fahrzeuges 1 dienen. Dazu werden die Bordwände 17, wie dargestellt, nach unten geklappt und dort fixiert.

Die Seitenwände 11 des Fahrzeugaufbaus sind in bekannter Weise als Rollwände 11 ausgeführt und reichen in der oberen Position A der Ladeboxen 2 bis zu deren Böden 14 herunter.

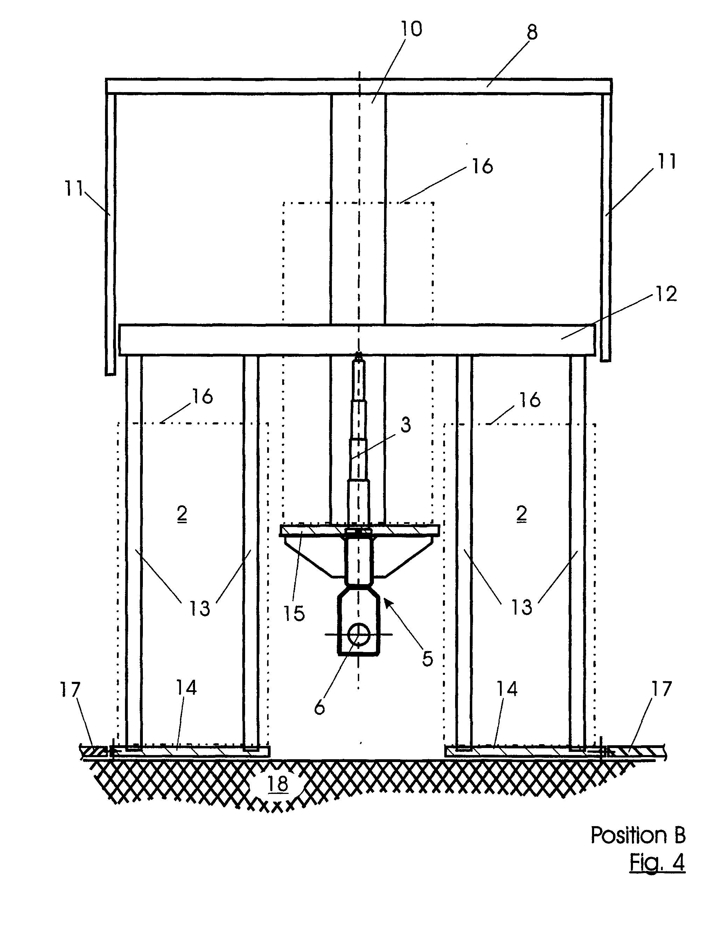

In Fig. 4 ist die untere zum Abladen des Ladeguts ohne eine Laderampe vorgesehene Position B der Ladeboxen 2 dargestellt, in der das Ladegut 16 ebenerdig entladen werden kann. Dabei dienen die Bordwände 17 als Übergang von der Ladebox 2 auf einen umgebenden Erdboden 18. Um das auf der über dem Mittelrahmen 5 angeordneten Ladefläche 15 gelagerte Ladegut 16 abzuladen, müssen die Ladeboxen 2 nach ihrem Entladen zuerst wieder in die obere Position A gebracht werden. Dann kann das auf der mittleren Ladefläche 15 lagernde Ladegut 16 in eine der Ladeboxen 2 bewegt werden. Aus den Ladeboxen 2 kann das Ladegut 16 nach deren erneutem Absenken in die Position B ebenerdig entladen werden.

In Fig. 5 ist die während der Fahrt übliche Position C der Ladeboxen 2 zu erkennen. Durch die tiefe Lage der Ladeboxen 2 in der Position C ist kein Unterfahrschutz notwendig, so daß die Bordwände 17 ihre eigentliche Hauptaufgabe erfüllen und die nach oben geklappten Bordwände 17 können den seitlichen Spalt, welcher zwischen der tiefstmöglichen Position der Rollwände 11 und den Böden 14 der Ladeboxen 2 liegt, verschließen.

Durch den gegenüber der Position A weitaus niedriger liegenden Schwerpunkt des Gesamtsystems wirkt sich die mittlere Position C sehr positiv auf das Fahrverhalten des Fahrzeuges 1 aus. Sie sollte daher, immer wenn die Abmessungen des Ladeguts 16 dies erlauben, zum Fahren des Fahrzeuges 1 gewählt werden.

Fig. 6 beschreibt in der von den vorhergehenden Figuren bekannten Ansicht eine alternative Ausführung des Fahrzeuges 1, wobei hier die Böden 14 der Ladeboxen 2 in einer möglichst breiten Ausführung gewählt wurden. Die über dem Mittelrahmen 5 verbleibende Ladefläche 15 weist nur die Breite auf, die unbedingt nötig ist, um den Mittelrahmen 5 bei einem Absenken der Ladeboxen 2 nicht zu beschädigen.

In Fig. 7 ist eine Vergrößerung des Details VII der Fig. 6 dargestellt. Dabei läßt sich erkennen, daß jeweils ein als Blech 19 ausgebildetes bewegliches Teil beweglich mit den Böden 14 der Ladeboxen 2 verbunden ist. In der Position A der Ladebox 2 kann dieses Blech 19 über eine Fuge 20 zwischen dem Boden 14 der Ladebox 2 und der weiteren Ladefläche 15 geklappt werden. Beim Beladen des Fahrzeuges 1 hilft das Blech 19, daß die Fuge 20 z.B. von Hubwagen leichter überfahren werden kann. Bevor die Ladeboxen 2 aus der oberen Position A abgesenkt werden, müssen die Bleche 19 in eine senkrecht nach oben weisende Stellung der Bleche 19' gebracht und fixiert werden. Dadurch wird sichergestellt, daß das Ladegut 16 seitlich nicht über die Böden 14 der Ladeboxen 2 hinausragt, wodurch beim Absenken aus der Position A oder beim Wiederanheben in die Position A der Ladeboxen 2 Teile des Mittelrahmens 5 oder der weiteren Ladefläche 15 durch das Ladegut 16 beschädigt werden könnten.

Natürlich ist eine Montage der Bleche 19 an den Böden 14 der Ladeboxen 2 nicht nur bei dem in Fig. 6 dargestellten Ausführungsbeispiel denkbar und sinnvoll, sondern auch bei allen weiteren Ausführungen des Fahrzeuges 1. Obwohl das Blech 19 in den Fig. 3 bis Fig. 6 nicht zu erkennen ist, sind auch dort die Böden 14 der Ladeboxen 2 jeweils mit dem vorteilhaften Blech 19 ausgestattet.

Bei der Konstruktion des Fahrzeuges 1 sind selbstverständlich verschiedene, weitere Ausführungen möglich, insbesondere bezüglich der Breite der Ladeboxen 2 und der weiteren Ladefläche 15, so daß sich der Aufbau des Fahrzeuges 1 an die von seinem Einsatzzweck bestimmten Erfordernisse und an das zu erwartende Ladegut 16 leicht anpassen läßt.

## Patentansprüche

1. Fahrzeug (1) mit Ladeboxen (2) zur Aufnahme von Ladegut, wobei wenigstens eine der Ladeboxen (2) durch Hubeinrichtungen (3) in vertikaler Richtung heb- und senkbar ist, wobei die Hubeinrichtungen (3) auf einem in Fahrzeuglängsrichtung verlaufenden Mittelrahmen (5) und an den Ladeboxen angeordnet sind, und wobei die Ladeboxen (2) in einer unteren Position (B) ebenerdig entladbar sind,
**dadurch gekennzeichnet, daß**
wenigstens eine der Ladeboxen (2) durch die Hubeinrichtungen (3) in wenigstens drei Positionen (A,B,C) bringbar ist, daß der größte Teil des Raumes oberhalb des Mittelrahmens (5) als weitere Ladefläche (15) zur Verfügung steht, wobei Böden (14) der Ladeboxen (2) in einer oberen Position (A) auf derselben Höhe wie die weitere Ladefläche (15) liegen, wobei eine normale Fahrposition (C) des Fahrzeuges zwischen der oberen und der unteren Position (A,B) liegt, und wobei das Fahrzeug (1) auch in der oberen Position (A) fahrbar ist.

2. Fahrzeug nach Anspruch 1,
**dadurch gekennzeichnet, daß**
in der oberen Position (A) die Böden (14) der Ladeboxen (2) auf Rampenhöhe zu liegen kommt.

3. Fahrzeug nach Anspruch 1 oder 2,
**dadurch gekennzeichnet, daß**
die Hubeinrichtungen (3) am vorderen und/oder hinteren Endbereich der Ladeboxen (2) auf dem Mittelrahmen (5) angeordnet sind.

4. Fahrzeug nach Anspruch 1, 2 oder 3,
**dadurch gekennzeichnet, daß**
die Hubeinrichtungen (3) jeweils wenigstens ein Querjoch (12) aufweisen, welches quer zu der Fahrzeuglängsrichtung verläuft und mit wenigstens einer der Ladeboxen (2) verbunden ist.

5. Fahrzeug nach einem der Ansprüche 1 bis 4,
**dadurch gekennzeichnet, daß**
die wenigstens eine Ladebox (2) zwischen dem Boden (14) der Ladebox (2) und einem der Querjoche (12) Zugstangen (13) aufweist.

6. Fahrzeug nach einem der Ansprüche 1 bis 5,
**dadurch gekennzeichnet, daß**
die Ladeboxen (2) an wenigstens einigen Bereichen der Außenseiten des Fahrzeuges (1) Bordwände (17) aufweisen, wobei die Bordwände (17) in wenigstens einer annähernd senkrecht zu dem Boden (14) der Ladebox (2) nach oben weisenden und einer wenigstens annähernd senkrecht zu dem Boden (14) der Ladebox (2) nach unten weisenden Stellung fixierbar sind.

7. Fahrzeug nach einem der Ansprüche 1 bis 6,
**dadurch gekennzeichnet, daß**
die Böden (14) Ladeboxen (2) auf ihrem dem Mittelrahmen (5) des Fahrzeuges (1) zugewandten Seite bewegliche Teile (19) aufweisen, welche in der oberen Position (A) der Ladeboxen (2) über einer Fuge (20) zwischen Ladebox (2) und weiterer Ladefläche (15) zu liegen kommen, und in allen anderen Positionen (B,C) der Ladeboxen (2) in einer nach oben weisenden Lage fixierbar sind.

8. Fahrzeug nach einem der Ansprüche 1 bis 7,
**dadurch gekennzeichnet, daß**
wenigstens eine der rechten Ladeboxen (2) und eine der linken Ladeboxen (2) quer zur Fahrzeuglängsrichtung dieselbe Breite aufweisen, wobei auch die weitere Ladefläche (15) diese Breite aufweist.

9. Fahrzeug nach einem der Ansprüche 1 bis 7,
**dadurch gekennzeichnet, daß**
wenigstens eine der rechten Ladeboxen (2) und eine der linken Ladeboxen (2) quer zur Fahrzeuglängsrichtung dieselbe Breite aufweisen, wobei die weitere Ladefläche (15) lediglich die Breite aufweist, die erforderlich ist, um den Mittelrahmen (5) des Fahrzeuges (1) wenigstens annähernd ganz zu überdecken.

## Claims

1. Vehicle (1) with loading boxes (2) for receiving loads, wherein at least one of the loading boxes (2) is vertically liftable and lowerable by means of lifting devices (3), wherein the lifting devices (3) are disposed on a middle frame (5), which extends in vehicle longitudinal direction, and adjacent to the loading boxes, and wherein the loading boxes (2) are unloadable in a lower position (B) at ground level,
**characterized in that**
at least one of the loading boxes (2) is movable by means of the lifting devices (3) into at least three positions (A, B; C), that most of the space above the middle frame (5) is available as a further loading area (15), wherein bases (14) of the loading boxes (2) in an upper position (A) are situated at the same height as the further loading area (15), wherein a normal driving position (C) of the vehicle lies between the upper and lower position (A, B), and wherein the vehicle (1) is drivable also in the upper position (A).

2. Vehicle according to claim 1.
**characterized in that**
in the upper position (A) the bases (14) of the loading boxes (2) comes to lie at loading platform height.

3. Vehicle according to claim 1 or 2,
**characterized in that**
the lifting devices (3) are disposed on the middle frame (5) at the front and/or rear end region of the loading boxes (2).

4. Vehicle according to claim 1, 2 or 3,
**characterized in that**
the lifting devices (3) each comprise at least one transverse yoke (12), which extends at right angles to the vehicle longitudinal direction and is connected to at least one of the loading boxes (2).

5. Vehicle according to one of claims 1 to 4,
**characterized in that**
the at least one loading box (2) comprises connecting rods (13) between the base (14) of the loading box and one of the transverse yokes (12).

6. Vehicle according to one of claims 1 to 5,
**characterized in that**
the loading boxes (2) at at least some regions of the outer sides of the vehicle (1) have tailboards (17), wherein the tailboards (17) are fixable in at least one position directed upwards approximately at right angles to the base (14) of the loading box (2) and in at least one position directed downwards approximately at right angles to the base (14) of the loading box (2) .

7. Vehicle according to one of claims 1 to 6,
**characterized in that**
the bases (14) loading boxes (2) at their side facing the middle frame (5) of the vehicle (1) have movable parts (19), which in the upper position (A) of the loading boxes (2) come to lie above a gap (20) between loading box (2) and further loading area (15) and in all other positions (B, C) of the loading boxes (2) are fixable in an upwardly directed position.

8. Vehicle according to one of claims 1 to 7,
**characterized in that**
at least one of the righthand boxes (2) and one of the lefthand boxes (2) have the same width at right angles to the vehicle longitudinal direction, wherein the further loading area (15) also has said width.

9. Vehicle according to one of claims 1 to 7,
**characterized in that**
at least one of the righthand boxes (2) and one of the lefthand boxes (2) have the same width at right angles to the vehicle longitudinal direction, wherein the further loading area (15) has merely the width required to at least approximately entirely overlap the middle frame (5) of the vehicle (1).

## Revendications

1. Véhicule (1) comportant des compartiments de chargement (2) destinés à recevoir une matière à charger, dans lequel au moins un compartiment de chargement (2) peut être élevé et abaissé dans la direction verticale par des dispositifs élévateurs (3), les dispositifs élévateurs (3) étant agencés sur un châssis central (5) s'étendant dans la direction longitudinale du véhicule et au droit des compartiments de chargement, et les compartiments de chargement (2) pouvant être déchargés au niveau du sol dans une position inférieure (B),
**caractérisé en ce que**
au moins un des compartiments de chargement (2) peut être placé dans au moins trois positions (A, B, C) par les dispositifs élévateurs (3), **en ce que** la plus grande partie de l'espace situé au-dessus du châssis central (5) est disponible pour servir de surface de chargement additionnelle (15), les planchers (14) des compartiments de chargement (2) placés dans une position supérieure (A) se trouvant au même niveau que la surface de chargement additionnelle (15), une position normale de roulement (C) se trouvant entre la position supérieure et la position inférieure (A, B) et le véhicule (1) pouvant aussi rouler dans la position supérieure (A).

2. Véhicule selon la revendication 1,
**caractérisé en ce que,**
dans la position supérieure (A), les planchers (14) des compartiments de chargement (2) viennent se placer au niveau du quai.

3. Véhicule selon la revendication 1ou 2,
**caractérisé en ce que**
les dispositifs élévateurs (3) sont disposés sur le châssis central (5) dans la région terminale avant et/ou dans la région terminale arrière des compartiments de chargement (2).

4. Véhicule selon la revendication 1, 2 ou 3,
**caractérisé en ce que**
les dispositifs élévateurs (3) comportent chacun au moins une traverse (12) qui s'étend transversalement à la direction longitudinale du véhicule et est reliée à au moins un des compartiments de chargement (2).

5. Véhicule selon l'une des revendications 1 à 4,
**caractérisé en ce que**
le au moins un compartiment de chargement (2) comporte des barres de traction (13) entre le plancher (14) du compartiment de chargement (2) et une des traverses (12).

6. Véhicule selon l'une des revendications 1 à 5,
**caractérisé en ce que**
les compartiments de chargement (2) comportent des ridelles (17) dans au moins quelques régions des côtés extérieurs du véhicule (1), les ridelles (17) pouvant être immobilisées dans au moins une position pointant vers le haut à peu prés perpendiculairement au plancher (14) du compartiment de chargement (2), et dans au moins une position pointant vers le bas à peu près perpendiculairement au plancher (14) du compartiment de chargement (2).

7. Véhicule selon l'une des revendications 1 à 6,
**caractérisé en ce que**
les planchers (14) des compartiments de chargement (2) comportent, sur leur côté dirigé vers le châssis central (5) du véhicule (1), des parties mobiles (19) qui, dans la position supérieure (A) des compartiments de chargement (2), viennent se placer au-dessus d'un joint (20) entre le compartiment de chargement (2) et la surface de chargement additionnelle (15), tandis que, dans toutes les autres positions (B, C) des compartiments de chargement (2), elles peuvent être immobilisées dans une attitude pointant vers le haut.

8. Véhicule selon l'une des revendications 1 à 7,
**caractérisé en ce que**
au moins un des compartiments de chargement (2) de droite et un des compartiments de chargement (2) de gauche ont la même largeur transversalement à la direction longitudinale du véhicule, la surface de chargement additionnelle (15) ayant également cette largeur.

9. Véhicule selon l'une des revendications 1 à 7,
**caractérisé en ce que**
au moins un des compartiments de chargement (2) de droite et un des compartiments de chargement (2) de gauche ont la même largeur transversalement à la direction longitudinale du véhicule, la surface de chargement additionnelle (15) ayant seulement la largeur qui est nécessaire pour recouvrir au moins à peu près totalement le châssis central (5) du véhicule (1).
